(19) Europäisches Patentamt
European Patent Office
Office européen des brevets

(11) Publication number: **0 484 668 B1**

(12) **EUROPEAN PATENT SPECIFICATION**

(45) Date of publication of patent specification: **30.11.94**

(51) Int. Cl.5: **B62D 13/04**, B62D 7/14, B62D 53/04

(21) Application number: **91116330.1**

(22) Date of filing: **25.09.91**

# (54) Steerable trailer and steering apparatus of combination vehicle.

(30) Priority: **26.09.90 JP 99741/90**
**17.10.90 JP 107914/90**

(43) Date of publication of application:
**13.05.92 Bulletin 92/20**

(45) Publication of the grant of the patent:
**30.11.94 Bulletin 94/48**

(84) Designated Contracting States:
**DE FR GB IT SE**

(56) References cited:
**EP-A- 0 282 426**
**EP-A- 0 308 263**
**DE-A- 3 622 072**
**DE-A- 3 837 981**
**DE-U- 8 616 691**

**PATENT ABSTRACTS OF JAPAN, vol. 6, no. 50 (M-120)(928), 3 April 1982 & JP-A-56 163 968**

(73) Proprietor: **NISSAN DIESEL MOTOR CO., LTD.**
**1-1, Ageo**
**Saitama 362 (JP)**

(72) Inventor: **Notsu, Ikurou**
**416-4, Ushijima,**
**Kasukabe**
**Saitama 344 (JP)**

(74) Representative: **Lehn, Werner, Dipl.-Ing. et al**
**Hoffmann, Eitle & Partner,**
**Patentanwälte,**
**Postfach 81 04 20**
**D-81904 München (DE)**

EP 0 484 668 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to tractor/semitrailer-combination vehicles and steerable semitrailers of such combination vehicles. Especially, the present invention relates to a steering apparatus for such combination vehicles.

From EP-A-0 282 426, corresponding to the preamble of claim 2, a trailer steering wheel control system is known which uses an electronic control unit to regulate the angle of steering wheels of a trailer. The turning of the steering wheels is obtained by means of a hydraulic cylinder and a hydraulic control unit supplied from the tractor and controlled by an electronic unit responding to signals supplied by an angle detector connected to the towing linkage and mounted on the pivot axis with the tractor vehicle. A detector indicates to the electronic unit that the desired steering angle has been obtained. The proposed control system reduces tire wear due to lateral slipping.

From DE-A-36 22 072 a device for controlling the steering angle of rear wheels of a vehicle is known. The vehicle is equipped with sensors to monitor the front and rear axis' steering, or the setting for each wheel, as well as the distance travelled. A control point on the front of the vehicle is monitored during cornering and a corresponding control steering signal is generated for a control point on the rear axle of the vehicle so that it accurately follows the front point, with the respective distance offset. A control incorporates a memory which stores the relevant steering angles for each unit of the distance travelled.

Deviations from the tracking are computed and used to generate correction steering signals for the rear wheel steering. Thereby, it is achieved that the rear end of the vehicle does not swing outwards on corners. However, the steering device is described for an individual vehicle only and not in connection with a combination vehicle.

From JP-A-56-163 968 a semitrailer is known which comprises a steering mechanism of trailer wheels being controlled in response to output signals from a feedback circuit provided in a control circuit including a microcomputer which receives electric signals representing the steering status of front wheels and a rotational status of the wheels as input signals. A path of the trailer may approach that of the tractor so that tractor and trailer can pass through an narrow curved path and can prevent any obstacle from being caught under the wheels with the least inward turning. Since steering is controlled with feedback control and the rear wheels are non-steering wheels, it is difficult to make a path of the trailer align with that of the tractor.

From JP-U-2-144 880, published after the priority date of the present patent, a steering apparatus for semitrailers is known. However, since the rear wheel steering angle is controlled to make the rear end of the trailer to follow the path of the front end of the tractor, a complicated control operation is required. Also, since trailer items (distances between coupler and rear end, coupler and rear wheel set, and rear wheel set and rear end) are included in the control operation expression, the kind of trailers to be coupled is restricted.

In view of the above prior art, it is an object of the present invention to provide a tractor/semitrailer-combination vehicle and a steerable semitrailer of such combination vehicle with an improved mobility achieved by simple control and having no restrictions.

This object is solved by a tractor/semitrailer-combination vehicle, of which the front and the rear wheels of the tractor and the wheels of the semitrailer are steerable, comprising:

- front wheels steering angle detecting means for detecting the steering angle of the front wheels of the tractor;
- coupling angle detecting means for detecting the angle between the center lines of the tractor and the semitrailer;
- rear wheels steering angle detecting means for detecting the steering angle of the rear wheels of the tractor;
- trailer wheels steering angle detecting means for detecting the steering angle of the wheels of the semitrailer;
- actuator means for steering the rear wheels of the tractor;
- actuator means for steering the wheels of the semitrailer; and
- control means for calculating and memorizing a travel direction of a front end of the tractor at voluntary points in response to signals transmitted from each of said detecting means and for transmitting output signals to each of said actuator means so as to align the travel directions of a coupling point and a rear end of the semitrailer with the memorized travel directon of the front end of the tractor when the coupling point and the rear end of the semitrailer reach a voluntary point.

In the combination vehicle being constructed as mentioned above, at a voluntary point (represented by a point A), the controller calculates a travel direction on the front end of the tractor due to the front wheel steering angle being detected and memorizes such the direction. Next, the controller calculates such a rear wheel steering angle that a travel direction of the coupling point (referred to as point B) is equal to the travel direction on the front end of the tractor when point B reaches a location of the point A, and then, the controller controls the rear wheel actuator.

Also, the controller calculates such a trailer wheel steering angle that a travel direction of the rear end (referred to as point C) of trailer is equal to the above-mentioned travel direction when point C reaches a location of the point A, and then, the controller controls the trailer wheel actuator.

By the above-mentioned manner, steering angles of rear and trailer wheels are predicted, the rear wheel actuator and the trailer wheel actuator are controlled, and then, all of the paths of points A, B, and C concur (align) with one another.

The above subject is further solved by a steerable semitrailer of a tractor/semitrailer-combination vehicle, comprising:

- coupling angle detecting means for detecting the angle between the center lines of the tractor and the semitrailer;
- trailer wheels steering angle detecting means for detecting the steering angle of the wheels of the semitrailer;
- actuator means for steering the wheels of the semitrailer; and
- control means for calculating and memorizing a travel direction of a coupling point at voluntary points in response to signals transmitted from each of said detecting means and for transmitting output signals to said actuator means so as to align the travel direction of a rear end of the semitrailer with the memorized travel direction of the coupling point when the rear end of the semitrailer reaches a voluntary point.

Originally, a sideslip angle should be considered in order to determine a travel direction of the coupling point. However, since a distance between the rear wheel set of tractor and the coupling point is short, the sideslip angle can be considered as zero. Therefore, the controller can control the rear end of trailer so as to make the rear end of trailer follow (and/or trace) a path of the coupling point, due to a simple operation control calculation.

Embodiments of the present invention is explained hereinafter with reference to accompanied drawings.

| | |
|---|---|
| Fig. 1 | is a general arrangement showing an embodiment of the present invention. |
| Fig. 2 | is a control block diagram. |
| Fig. 3 | is a control flow chart. |
| Fig. 4 | is a drawing for explaining a unit distance. And |
| Fig. 5 | is a drawing for explaining a calculation mode. |
| Fig. 6 | is a general arrangement showing an embodiment of the present invention. |
| Figs. 7 and 8 | are plans for explaining the calculation modes. |
| Fig. 9 | is a control flow chart while the key switch is ON. |
| Fig. 10 | is a control flow chart of detection and storage of coupling angle. And |
| Fig. 11 | is a control flow chart for calculating the rear wheel target steering angle. |

[Embodiment]

The first embodiment of the present invention is explained with reference to Figs.1-5.

In Fig.1, a steering mechanism 2 for steering a front wheel of tractor T includes a front wheel steering angle sensor 3 as a front wheel steering angle detection means. In a rear wheel 4, a rear wheel hydraulic cylinder 5 and rear wheel steering angle sensor 7 is provided as a rear wheel steering angle detection means. Also, a tractor T is provided with a vehicle speed sensor 8.

A coupler 9, which is a coupling point of tractor T and trailer R, is provided with a coupling angle sensor 10 for detecting a relative angle between center lines of tractor T and trailer R. Such the sensor 10 is provided as a coupling angle detection means.

Trailer wheel 11 is provided with a trailer wheel hydraulic cylinder 12 and a trailer wheel steering angle sensor 16 as a trailer wheel steering angle detection means. Actuators 5 and 12 are selectively connected with a hydraulic pump 14 or an oil tank 15 through servo valves 6 and 13, respectively. Also, sensors 3, 7, 8, 10, and 16, and servo valves 6 and 13 are connected with controller 20 individually.

In Fig. 2, a controller 20, which comprises a circuit including a microcomputer, is provided with a central processing unit (CPU) 21. Through an input interface 24, the CPU 21 is connected with the front wheel steering angle sensor 3, vehicle speed sensor 8, and coupling angle sensor 10. Thus, signals from these sensors 3, 8, and 10 are input to CPU 21 through the input interface 24. Also, through output interface 25 being followed by D/A converters 26 and 28, a signal from CPU 21 is transmitted to a rear wheel servo amplifier 27 and a trailer wheel servo amplifier 29, respectively. In addition to the CPU 21, controller 20 is provided with ROM 22 for memorizing programs and operation expressions, and RAM 23 for memorizing a travel direction of the front end of tractor at a voluntary point, which direction is culculated by CPU 21. Through the servo valve 6, the above rear wheel servo amplifier 27 is connected with the rear wheel hydraulic cylinder 5, and also, the amplifier 27 is directly connected with rear wheel steering angle sensor 7. Similarly, through a servo valve 13, a trailer wheel servo amplifier 29 is connected with the trailer wheel hydraulic cylinder 12, and also, the amplifier 29 is directly connected with the trailer wheel steering angle sensor 16.

Upon controlling, as shown in Fig. 3, with every travel of a prescribed unit distance D (shown in Fig. 4) being calculated due to signals from vehicle speed sensor 8 (step S1 is YES), controller 20 detects the front wheel steering angle and coupling angle (steps S2 and S3) due to signals from front wheel steering angle sensor 3 and coupling angle sensor 10. Then, the controller 20 calculates the rear wheel steering angle, trailer wheel steering angle, tractor yawing angle, and trailer yawing angle (steps S4, S5, S6, and S7). Next, the controller 20 calculates a travel direction of front end of the tractor T at a voluntary point (step 8). Due to this calculated result, controller 20 outputs control signals to the rear wheel hydraulic cylinder 5 and trailer wheel hydraulic cylinder 12, and then, controlling procedure returns to step S1.

Hereinafter, a calculation mode is explained in reference with drawings of Fig. 5.

In Fig. 5, symbols A, B, C, and P denote a point of the front end of the tractor T, coupling point, point of the rear end of trailer R, and a center of gravity of wheel base L of tractor T, respectively. Also, symbols $\delta f$, $\delta r$, and $\delta t$ denote steering angles of the front wheel 1, rear wheel 4, and trailer wheel 11, respectively. Additionally, all of the angles are represented by radian.

Angle of sideslip $\beta A$ at point A is:

$$\beta A = \{(B + Lf)/L\}\delta f + \{(A - Lf)/L\}\delta r$$

Angle of sideslip $\beta B$ at coupling point B is:

$$\beta B = Sh(i) - \psi_1$$

$$= \{(B - H)/L\}\delta f + \{(A + H)/L\}\delta r$$

In this equation, Sh(i) corresponds to a direction in which the coupling point B should be advanced.

Hence, a rear wheel steering angle $\delta r$, with which angle the coupling point B may advance in the direction of Sh(i), is:

$$\delta r = \{L/(A + H)\}\{Sh(i) - \psi_1\} - \{(B - H)/(A + H)\}\delta f$$

Angle of sideslip $\beta B_1$ of coupling point B, which angle $\beta B_1$ is viewed from trailer R, is:

$$\beta B_1 = Sh(i) - \psi_2$$

A sideslip angle $\beta C$ of point C on the rear end is:

$$\beta C = Sh(1) - \psi_2$$

In this equation, Sh(1) corresponds to a direction in which point C should be advanced.

Also,

$$\beta C = \{(Ll - LR)/Ll\}\beta B_1 + (LR/Ll)\delta t$$

Hence, a trailer wheel steering angle $\delta t$, with which the point C can advance in the direction of the yawing angle Sh(1) is:

$$\delta t = (Ll/LR)\{Sh(1) - \psi_2\} - \{(Ll - LR)/LR\}\{Sh(i) - \psi_2\}$$

Yawing rate $\dot{\psi}_1$ of tractor T is:

$\dot{\Psi}_1 = (\Delta D/L)(\delta f - \delta r)$

Vehicle angle in a unit time, that is, yawing angle $\psi_1$ is:

$\psi_1 = \psi_1 + \dot{\Psi}_1$

Yawing rate $\dot{\Psi}_2$ of trailer R is:

$\dot{\Psi}_2 = (\Delta D/L)(\beta B_1 - \delta t)$

Yawing angle $\psi_2'$ is:

$$\psi_2' = \psi_2' + \dot{\Psi}_2$$

Also, assuming that coupling angle = $\phi$, we get:

$$\psi_2 = \psi_2' - \phi$$

As above-mentioned, the controller calculates Sh(n), which represents a travel direction of point A, due to the front wheel steering angle $\delta f$, and memorizes Sh(n) in RAM 23. Also, the controller calculates the rear wheel steering angle $\delta r$ so that the coupling point B may advance in the same direction, that is, the travel direction on the front end of the tractor when point B reaches a location of the point A. And then, the controller controls the rear wheel hydraulic actuator 5.

Additionally, the controller calculates the trailer wheel steering angle so that point C may advance in the same direction, that is, the travel direction on the front end of the tractor when point C reaches a location of the point A. And then, the controller controls trailer wheel hydraulic actuator 12.

Thus, a path of voluntary point A on the front end of the tractor, coupling point B, and point C on the rear end of the trailer will surely concur (align) with one another.

The second embodiment of the present invention is explained with reference to Figs. 6-11.

In Fig. 6, a tractor 101 is provided with a steering 111 and link mechanism 113 for steering a pair of front wheel 112 in combination with the steering 111. Also, the tractor 101 is provided with a front wheel steering angle sensor 114 for detecting a steered angle of front wheel 112 by measuring an angle of steering 111, and a coupling angle sensor 117 which is attached to a coupler 116 and detects a coupling angle of the coupler 116. And a numeral 118 denotes a pair of rear wheel of the tractor 101.

On the other hand, the trailer 102 is provided with a vehicle speed sensor 115 for outputting a pulse signal, a frequency of which signal is proportional to a number of revolutions of the rear wheel, link mechanism 122 for steering the rear wheel 121, and a hydraulic actuator 123 for driving the link mechanism 122. Through a servo valve 126, the actuator 123 is connected with an oil pump 124 and an oil tank 125. These members 122-126 construct the steering mechanism. Also, the trailer 102 is provided with a rear wheel steering angle sensor 127 for detecting a steering angle of rear wheel 121. These members 114, 115, 117, 126 and 127 are connected with a controller, respectively. The controller is represented by a numeral 131, in general.

The controller 131 consists of a microcomputer. A CPU 134 in the controller 131 is connected with a A/D converter 132, which is connected with the front wheel steering angle sensor 114 and the coupling angle sensor 117, and a pulse input interface 133 which is connected with vehicle speed sensor 115. Also, ROM 136 and RAM 137 are conected with the CPU 134, respectively. Through a D/A converter 138 and a servo amplifier 135, the CPU 134 is connected with the servo valve 126, and the servo amplifier 135 is connected with the rear wheel steering angle sensor 127.

Next, a calculation mode is explained in Fig. 7.

In Fig. 7, assume that:

H: center of coupling point, that is, center of the coupler 116;

$\phi$: coupling angle;

C: rear end of the trailer 102;

C.G.: center of gravity of the trailer 102.

Then, a yawing rate $\dot{\Psi}_1$ is:

$$\dot{\Psi}_1 = (\phi - \delta t)V/Lt \quad (1)$$

A sideslip angle $\beta_1$ of center of gravity C.G. is:

$$\beta_1 = (Ltr \bullet \phi/Lt) + (Lft \bullet \delta t/Lt) \quad (2)$$

A sideslip angle $\beta c$ of point C is:

$$\beta c = \beta_1 - (Lc \bullet \dot{\Psi}_1/V) \quad (3)$$

From equations (1) and (2), equation (3) is:

$$\beta c = \{(Ltr - Lc)\phi/Lt\} + \{(Ltf + Lc)\delta t/Lt\}$$

Assuming that a character Lh denotes a distance between the rear wheel set of tractor 101 and the coupling point H, a sideslip angle $\beta h$ being viewed from the coupling point, that is, point H , is:

$$\beta h = (Lh/L) \bullet df + \phi$$

In which, a character L denotes a wheel base of the tractor 101. Since the distance Lh is so small as compared with the wheel base L, a value of "Lh/L" can be neglected, and therefore, we get:

$$\beta h \doteqdot \phi \quad \ldots\ldots \quad (4)$$

A travel direction $\gamma h$ of point H is:

$$\gamma h = \phi + \Psi_1 \quad (5)$$

Travel direction $\gamma c$ of point C is:

$$\gamma c = \beta c + \Psi_1$$
$$= \{(Ltr - Lc)\phi/Lt\} + \{(Ltf + Lc)\delta t/Lt\} + \Psi_1 \quad \ldots\ldots \quad (6)$$

If a discretion by a unit travel distance $\Delta x$ (Fig. 8) is carried out in order to make the point C follow and/or trace a path of the point H,

$$\gamma c(x) = \gamma h(x - n \bullet \Delta x) \quad (7)$$

In which,

$$n = (Ltf + Lc)/\Delta x \quad (8)$$

From the equations (5) and (6), we get:

$$\{(Ltr - Lc)\phi(x)/Lt\} + \{(Ltf + Lc)\delta t(x)/Lt\} + \Psi_1(x) = \gamma h(x - n \bullet \Delta x) \quad (9)$$

A yawing angle $\Psi_1$ (x) is represented as follows:

$$\Psi_1(x) = \Psi_1(x - n \bullet \Delta x) + \{(\phi(x) + \delta t(x)\Delta x/Lt\} \quad (10)$$

The equation (9) may also be transformed as follows:

$$\delta t(x) = \gamma h(x - n \cdot \Delta x) - \{(Ltr - Lc)\phi(x)/(Ltf + Lc)\} - Lt \cdot \phi(x)/(Ltf + Lc) \qquad (11)$$

Thus, the controller operates (and/or calculates) a travel direction of the point H with every unit travel distance $\Delta x$ by the equation (5), and memorizes such the travel direction in RAM 137. And then, the controller controls a target steering angle of rear wheel 121 of the trailer 102 by the equation (11), so as to make the point C move and/or pass in the same travel direction with the travel direction of the point H memorized in RAM 137 when the point C comes to a location that the point H has already passed.

Next, a control modes are explained with reference to Figs. 9-11.

In Fig. 9, with a key switch (not shown) ON, the controller 131 resets the previously memorized yawing angle $\Psi_1$ to zero (step S1), and then, sets a counter of unit travel distanced $\Delta x$ to 1 (step S2). Next, the controller sets the travel direction $\gamma h(i)$ to zero (step S3), and increases a value of the count by one (step S4). Then, when such a value of the count reaches a predeterminded count n (step S5 is YES), the controller returns. In other words, while the power is ON, a target travel direction of the point C is kept in initialized condition that the point C moves in a straight advance direction until the point C reach a location where the point H has passed.

In Fig. 10, with every unit time $\Delta t$, due to signals generated from the coupling angle sensor 117, the controller 131 detects the coupling angle $\phi$ (step S10), eliminates noises (step S11), stores the coupling angle in RAM 137 (step S12), and returns.

In Fig. 11, with every travel distance $\Delta x$, the controller 131 reads the coupling angle $\phi$, the yawing angle $\psi$, the travel direction $\gamma h(1)$ of the point H at the time that the point H was at the present location of the point C, and items (weight and lengths Lc, Lfr, Ltf, Lt, etc.) of the trailer 102 (steps S20, S21, S22, and S23).

Then, the controller 131 calculates the target steering angle $\delta t$ of the rear wheel 121 with reference to the equation (11) (step S24), and sets the count to 1 (step S25). Then, controller 131 increases the data value of the travel direction $\gamma h(i)$ by one (step S26), increases a count value by one (step S27), and determines whether the count value has reached a predeterminded count (value) n (step S28).

If No, the controller 131 returns to step S26.

If Yes, the controller 131 calculates a travel direction of the point H by the equation (5) (step S29), stores such the direction in RAM 137 (step S30). Then, the controller 131 calculates the yawing rate $\dot{\Psi}_1$ by the equation (1) (step S31), calculates the yawing angle $\Psi_1(x)$ by the equation (10) (step S32), outputs a signal of the target steering angle $\delta t$ to the servo amplifier 135 (step S33), and then, returns.

[Effect of the invention]

The present invention, constructed as explained above, is able to control steering angles of rear wheel and trailer wheels by a feed forward control, make paths of any point on the front end of tractor, coupling point, and a point on the rear end of trailer concur (align) with one another, reduce inner wheel difference of the trailer, make a turn without overhang problems, and improve mobility thereof.

Also, since the present invention is constructed as mentioned above, the rear wheel of trailer can be steered with a simple control, and the mobility of the vehicle carrying out the present invention is improved.

In addition, restrictions on trailers to be coupled can be removed.

## Claims

**1.** A tractor/semitrailer-combination vehicle, of which the front and the rear wheels of the tractor and the wheels of the semitrailer are steerable, comprising:

- front wheels steering angle detecting means (3) for detecting the steering angle of the front wheels (1) of the tractor (T);
- coupling angle detecting means (10) for detecting the angle between the center lines of the tractor (T) and the semitrailer (R);
- rear wheels steering angle detecting means (7) for detecting the steering angle of the rear wheels (4) of the tractor (T);
- trailer wheels steering angle detecting means (16) for detecting the steering angle of the wheels of the semitrailer (R);
- actuator means (5,6) for steering the rear wheels (4) of the tractor (T)

- actuator means (12,13) for steering the wheels (11) of the semitrailer (R); and
- control means (20) for calculating and memorizing a travel direction of a front end (A) of the tractor at voluntary points in response to signals transmitted from each of said detecting means (3,10,16) and for transmitting output signals to each of said actuator means (5,6;12,13) so as to align the travel directions of a coupling point (B) and a rear end (C) of the semitrailer with the memorized travel direction of the front end (A) of the tractor when the coupling point (B) and the rear end (C) of the semitrailer reach a voluntary point.

**2.** A method for controlling a steerable semitrailer of a tractor/semitrailer-combination vehicle, comprising:
- coupling angle detecting means (117) for detecting the angle between the center lines of the tractor (101) and the semitrailer (102);
- trailer wheels steering angle detecting means (127) for detecting the steering angle of the wheels of the semitrailer (102);
- actuator means (123,126) for steering the wheels (121) of the semitrailer (102); and
- control means (20) for transmitting output signals to said actuator means in response to input signals transmitted from each of said detecting means;

  characterized in that the control means calculates and memorizes a travel direction of a coupling point (H) at voluntary points in response to said input signals and transmits said output signals to said actuator means (123,126) so as to align the travel direction of a rear end (C) of the semitrailer with the memorized travel direction of the coupling point (H) when the rear end (C) of the semitrailer reaches a voluntary point.

**Patentansprüche**

**1.** Zugmaschinen/Sattelanhänger-Kombinationsfahrzeug, von dem die Vorderräder und Hinterräder des Zugfahrzeuges und die Räder des Sattelanhängers lenkbar sind und das aufweist:
- eine Vorderradlenkwinkel-Detektionseinrichtung (3) zum Detektieren des Lenkwinkels der Vorderräder (1) des Zugfahrzeuges (T);
- eine Kupplungswinkel-Detektionseinrichtung (10) zum Detektieren des Winkels zwischen den Mittellinien des Zugfahrzeuges (T) und des Sattelanhängers (R);
- eine Hinterrradlenkwinkel-Detektionseinrichtung (7) zum Detektieren des Lenkwinkels der Hinterräder (4) des Zugfahrzeuges (T);
- eine Anhängerradlenkwinkel- Detektionseinrichtung (16) zum Detektieren des Lenkwinkels der Räder des Sattelanhängers (R);
- eine Betätigungseinrichtung (5, 6) zum Lenken der Hinterräder (4) des Zugfahrzeuges (T);
- eine Betätigungseinrichtung (12, 13) zum Lenken der Räder (11) des Sattelanhängers (R); und
- eine Steuerungseinrichtung (20) zum Berechnen und Speichern einer Laufrichtung eines Vorderendes (A) des Zugfahrzeuges an beliebigen Punkten als Antwort auf Signale, die von jeder Detektionseinrichtung (3, 10, 16) übertragen werden, und zum Übertragen von Ausgangssignalen an jede Betätigungseinrichtung (5, 6; 12, 13), um auf diese Weise die Laufrichtungen eines Kupplungspunktes (B) und eines Hinterendes (C) des Sattelanhängers auf die gespeicherte Laufrichtung Vorderendes (A) des Zugfahrzeuges auszurichten, wenn der Kupplungspunkt (B) und das Hinterende (C) des Sattelanhängers einen beliebigen Punkt erreichen.

**2.** Verfahren zum Steuern eines lenkbaren Sattelanhängers eines Zugmaschinen/Sattelanhänger-Kombinationsfahrzeuges, das aufweist;
- eine Kupplungswinkel-Detektionseinrichtung (117) zum Detektieren des Winkels zwischen den Mittellinien des Zugfahrzeuges (101) und des Sattelanhängers (102);
- eine Anhängerradlenkwinkel-Detektionseinrichtung (127) zum Detektieren des Lenkwinkels der Räder des Sattelanhängers (102);
- eine Betätigungseinrichtung (123, 126) zum Lenken der Räder (121) des Sattelanhängers 102; und
- eine Steuerungseinrichtung (20) zum Übertragen von Ausgangssignalen an die Betätigungseinrichtungen als Antwort auf Eingangssignale, die von jeder Detektionseinrichtung übertragen werden; dadurch gekennzeichnet, daß die Steuereinrichtung eine Laufrichtung eines Kupplungspunktes (H) an beliebigen Punkten als Antwort auf die Eingangssignale berechnet und speichert und die Ausgangssignale auf die Betätigungseinrichtungen (123, 126) ausgibt, um auf diese Weise die Laufrichtung eines Hinterendes (C) des Sattelanhängers auf die gespeicherte Laufrichtung des Kupplungspunktes (H) auszurichten, wenn das Hinterende (C) des Sattelanhängers einen beliebigen Punkt erreicht.

**Revendications**

1. Véhicule tracteur/semi-remorque combiné, dont les roues avant et arrière du tracteur et les roues de la semi-remorque sont dirigeables, comprenant :
   - un moyen de détection d'angle de braquage des roues avant (3) pour détecter l'angle de braquage des roues avant (1) du tracteur (T),
   - un moyen de détection d'angle d'attelage (10) pour détecter l'angle entre les lignes centrales du tracteur (T) et de la semi-remorque (R),
   - un moyen de détection d'angle de braquage des roues arrière (7) pour détecter l'angle de braquage des roues arrière (4) du tracteur (T),
   - un moyen de détection d'angle de braquage des roues de remorque (16) pour détecter l'angle de braquage des roues de la semi-remorque (R),
   - un moyen d'actionnement (5, 6) pour braquer les roues arrière (4) du tracteur (T),
   - un moyen d'actionnement (12, 13) pour braquer les roues (11) de la semi-remorque (R), et
   - un moyen de commande (20) pour calculer et mémoriser une direction de déplacement de l'avant (A) du tracteur à des points choisis en réponse aux signaux transmis à partir de chacun desdits moyens de détection (3, 10, 16) et pour transmettre des signaux de sortie à chacun desdits moyens d'actionnement (5, 6 ; 12, 13) de façon à aligner les directions de trajectoire du point d'accouplement (B) et arrière (C) de la semi-remorque avec la direction de trajectoire mémorisée de l'avant (A) du tracteur lorsque le point d'accouplement (B) et l'arrière (C) de la semi-remorque atteignent un point choisi.

2. Procédé pour commander une semi-remorque d'un véhicule tracteur/semi-remorque combiné, comprenant :
   - un moyen de détection d'angle d'attelage (117) pour détecter l'angle entre les lignes centrales du tracteur (101) et de la semi-remorque (102),
   - un moyen de détection d'angle de braquage des roues de remorque (127) pour détecter l'angle de braquage des roues de la semi-remorque (102),
   - un moyen d'actionnement (123, 126) pour braquer les roues (121) de la semi-remorque (102), et
   - un moyen de commande (20) pour transmettre les signaux de sortie audit moyen d'actionnement en réponse aux signaux d'entrée transmis à partir de chacun desdits moyens de détection,

   caractérisé en ce que le moyen de commande est destiné à calculer et mémoriser une direction de trajectoire d'un point d'accouplement (H) à des points choisis en réponse auxdits signaux d'entrée et pour transmettre lesdits signaux de sortie auxdits moyens d'actionnement (123, 126) de façon à aligner la direction de trajectoire de l'arrière (C) de la semi-remorque avec la direction de trajectoire mémorisée du point d'accouplement (H) lorsque l'arrière (C) de la semi-remorque atteint un point choisi.

Fig.1

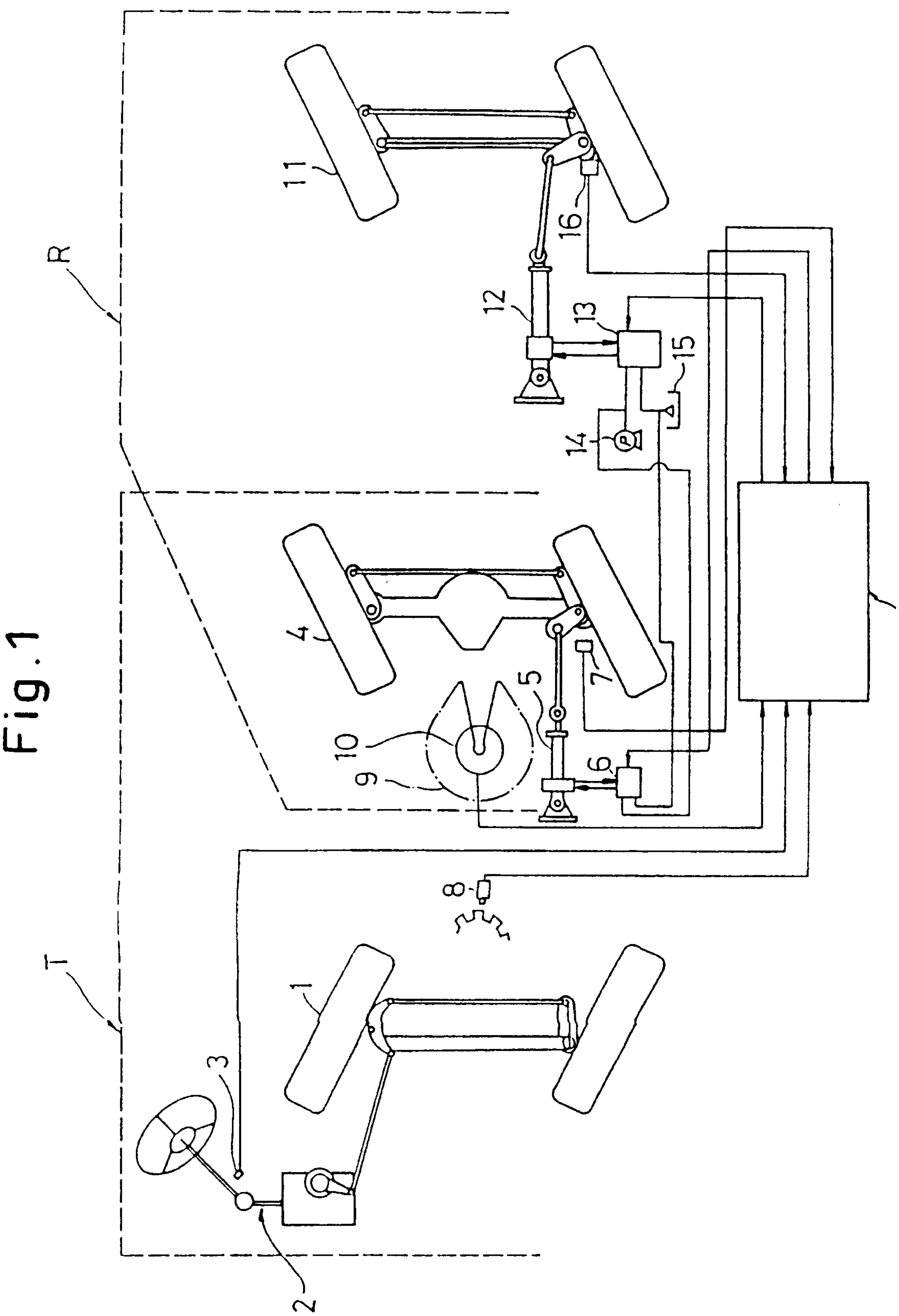

Fig. 2

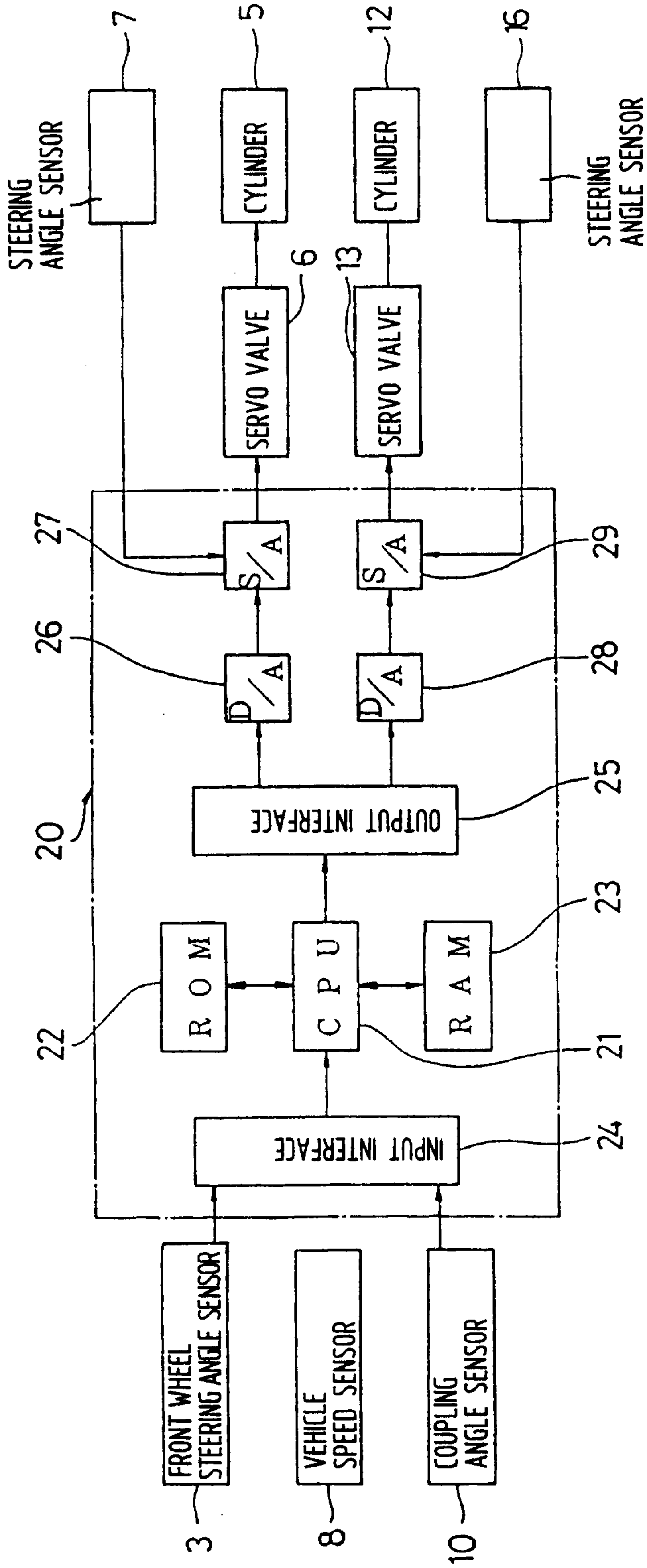
STEERING ANGLE SENSOR
CYLINDER
CYLINDER
STEERING ANGLE SENSOR
SERVO VALVE
SERVO VALVE
S/A
S/A
D/A
D/A
OUTPUT INTERFACE
ROM
CPU
RAM
INPUT INTERFACE
FRONT WHEEL STEERING ANGLE SENSOR
VEHICLE SPEED SENSOR
COUPLING ANGLE SENSOR
7
5
12
16
6
13
27
29
26
28
20
25
22
21
23
24
3
8
10

Fig. 3

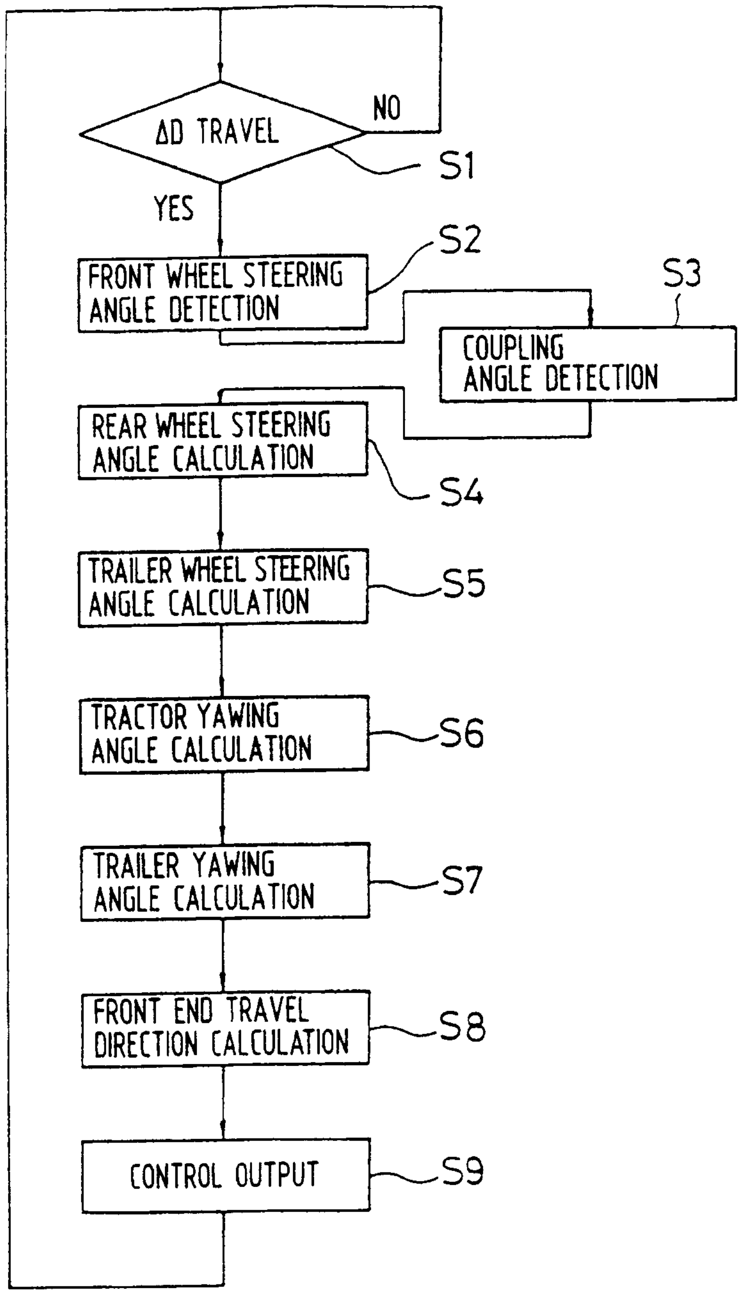
ΔD TRAVEL
NO
YES
S1
FRONT WHEEL STEERING ANGLE DETECTION
S2
COUPLING ANGLE DETECTION
S3
REAR WHEEL STEERING ANGLE CALCULATION
S4
TRAILER WHEEL STEERING ANGLE CALCULATION
S5
TRACTOR YAWING ANGLE CALCULATION
S6
TRAILER YAWING ANGLE CALCULATION
S7
FRONT END TRAVEL DIRECTION CALCULATION
S8
CONTROL OUTPUT
S9

Fig. 4

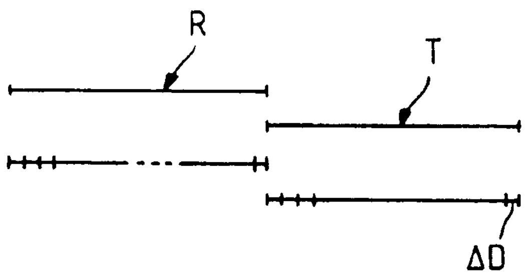
R
T
ΔD

Fig. 5

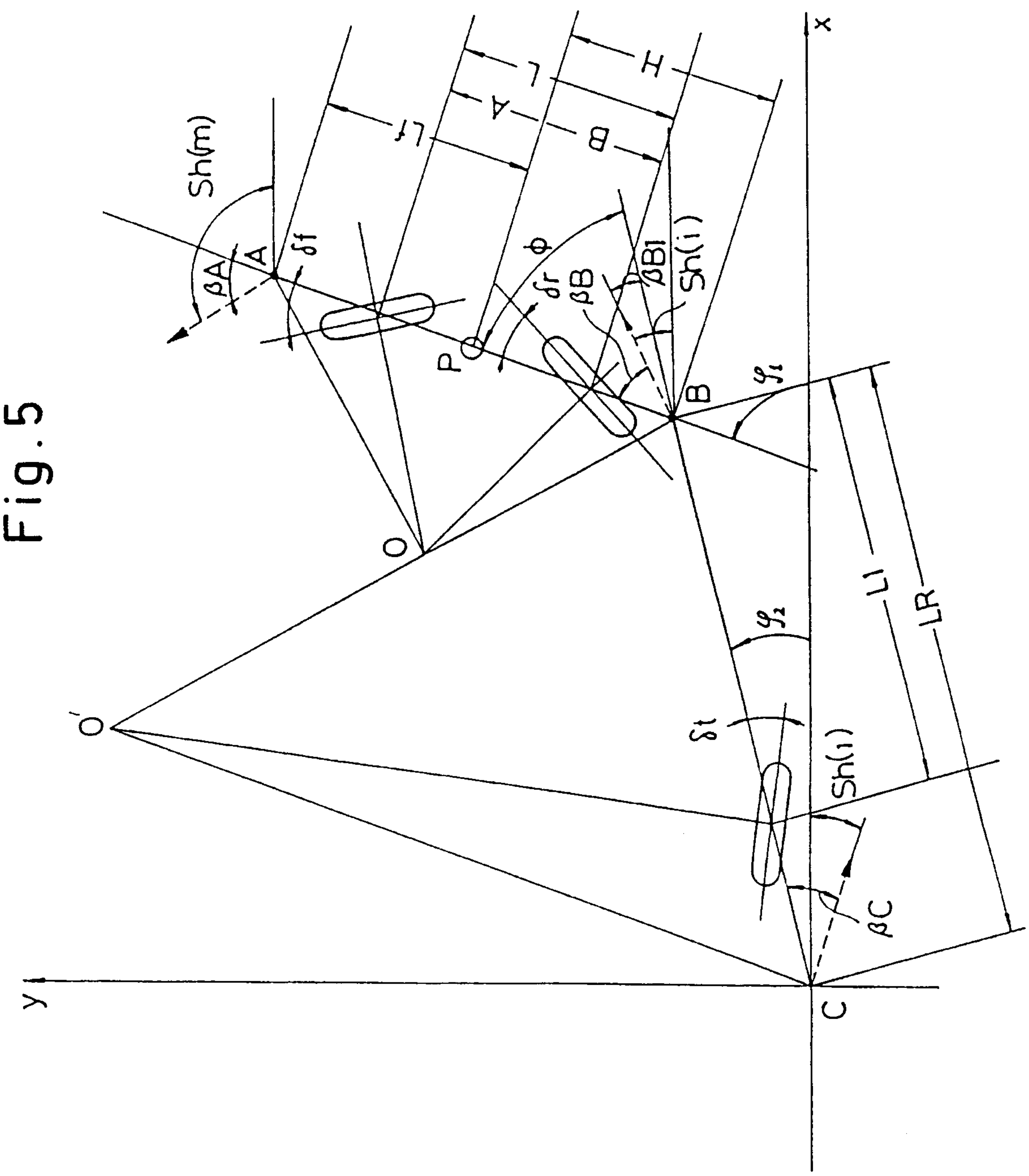

Fig.6

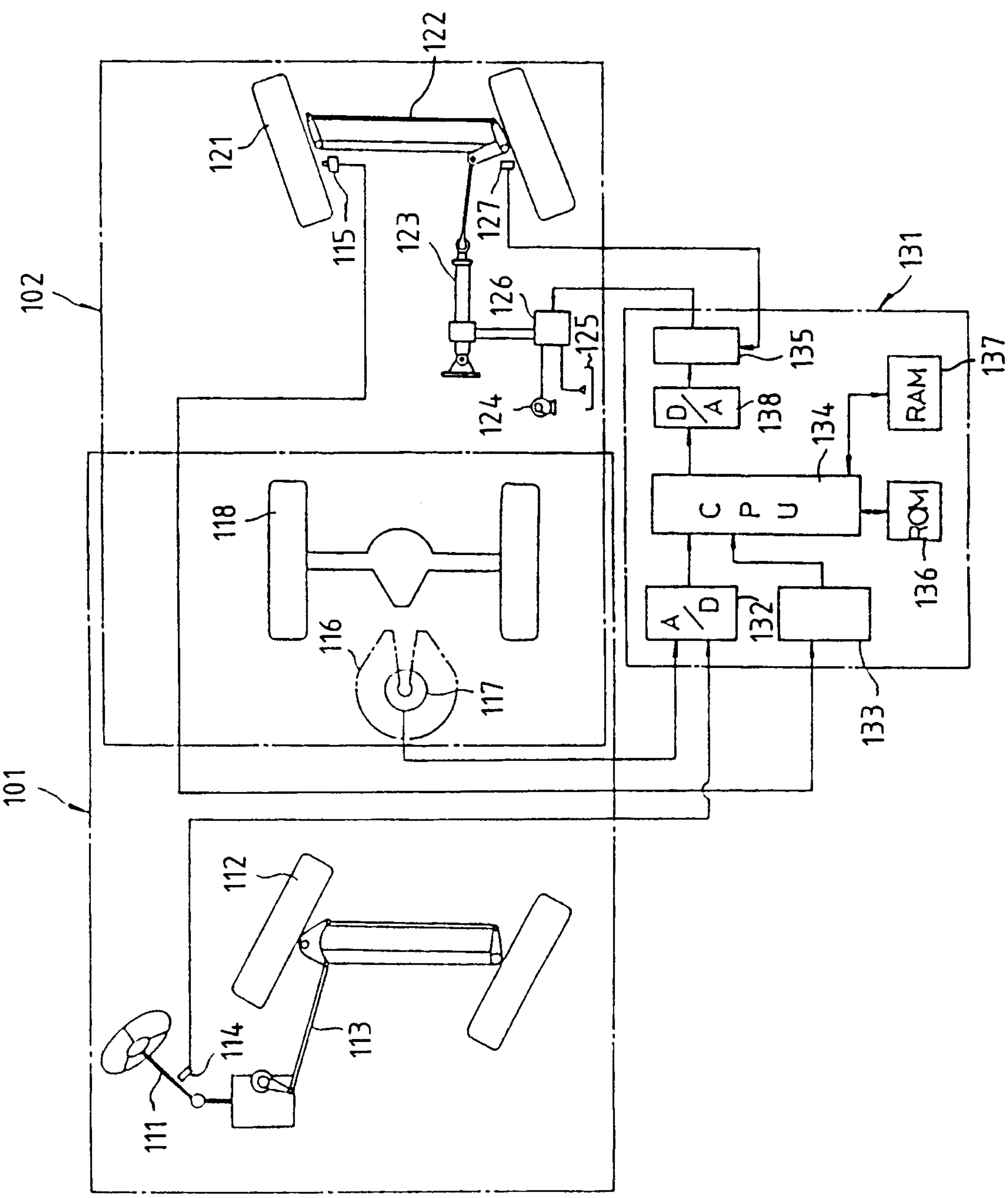

101
102
111
112
113
114
115
116
117
118
121
122
123
124
125
126
127
131
132
133
134
135
136
137
138
A/D
D/A
CPU
RAM
ROM

Fig. 7

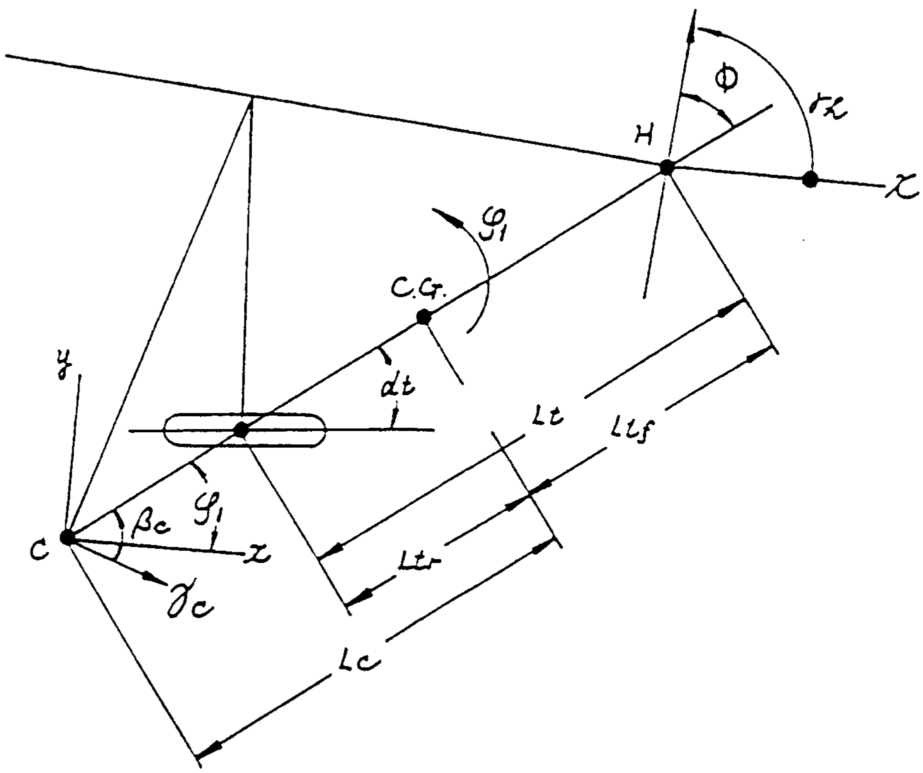


Fig. 8

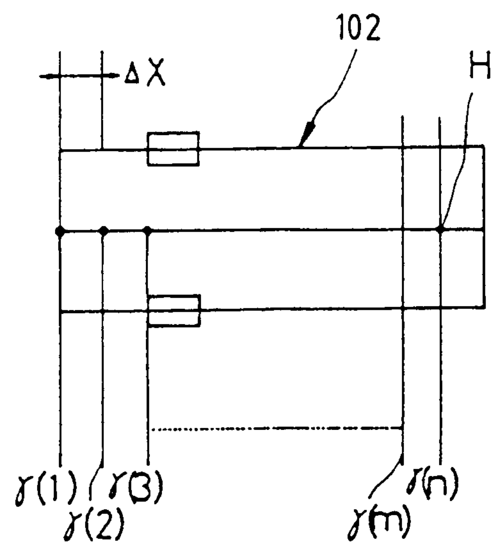

Fig. 9

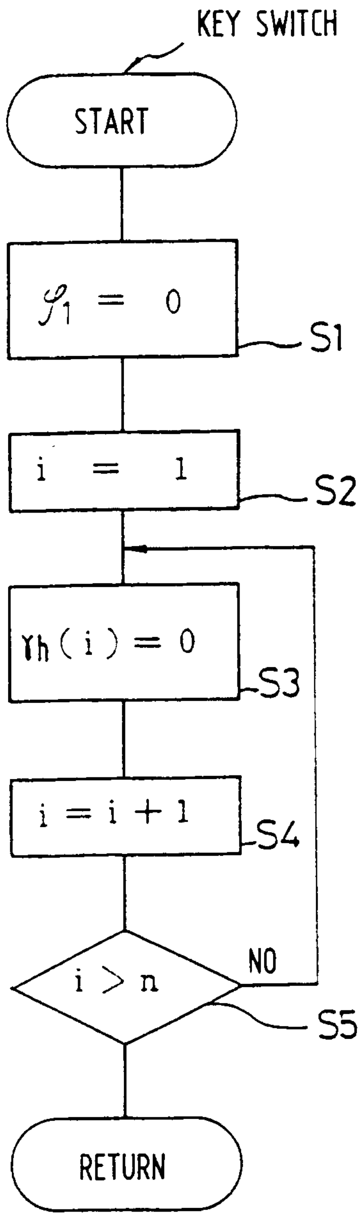
KEY SWITCH
START
$\varphi_1$ = 0
S1
i = 1
S2
γh(i) = 0
S3
i = i + 1
S4
i > n
NO
S5
RETURN

Fig.10

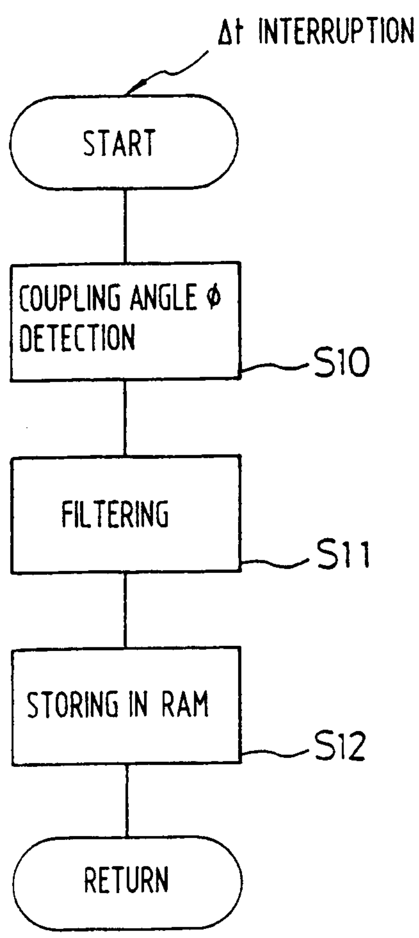
Δt INTERRUPTION
START
COUPLING ANGLE φ DETECTION
S10
FILTERING
S11
STORING IN RAM
S12
RETURN

Fig.11

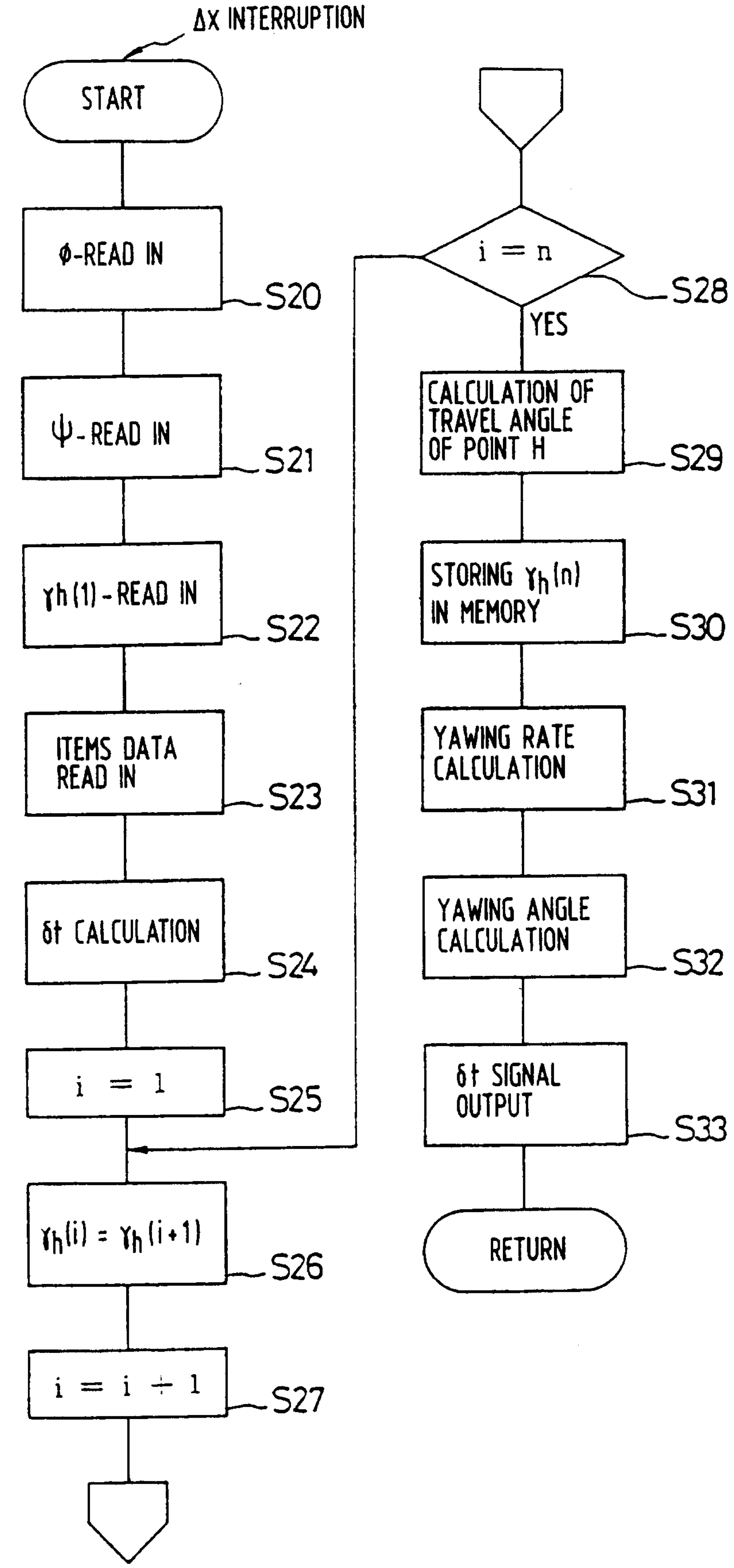
ΔX INTERRUPTION
START
φ-READ IN
S20
ψ-READ IN
S21
γh(1)-READ IN
S22
ITEMS DATA READ IN
S23
δt CALCULATION
S24
i = 1
S25
γh(i) = γh(i+1)
S26
i = i + 1
S27
i = n
S28
YES
CALCULATION OF TRAVEL ANGLE OF POINT H
S29
STORING γh(n) IN MEMORY
S30
YAWING RATE CALCULATION
S31
YAWING ANGLE CALCULATION
S32
δt SIGNAL OUTPUT
S33
RETURN